# EUROPEAN PATENT APPLICATION

(11) **EP 4 071 679 A1**
(43) Date of publication of application: **12.10.2022**
(21) Application number: 20896834.7
(22) Date of filing: 05.11.2020
(51) Int. Cl.: G06Q 10/06

(54) **ENVIRONMENTAL MANAGEMENT ANALYSIS SYSTEM AND ENVIRONMENTAL MANAGEMENT ANALYSIS PROGRAM**

(30) Priority: 04.12.2019 JP 2019219301
(71) Applicant: KONICA MINOLTA, INC., Tokyo 100-7015 (JP)
(72) Inventor: YAGUCHI, Tatsuya, Tokyo 100-7015 (JP); OKADA, Tatsunori, Tokyo 100-7015 (JP)
(74) Representative: Gille Hrabal Partnerschaftsgesellschaft mbB Patentanwälte
(86) International application number: PCT/JP2020/041373
(87) International publication number: WO 2021/111796

(57) **Abstract**

Provided are an environmental management analysis system and an environmental management analysis program capable of presenting information useful for improving environmental management of each business entity. The environmental management analysis system 100 includes an acquisition unit 345, an analysis unit 346, and a presentation unit 348. The acquisition unit 345 acquires information on an organization system related to environmental management of the business entity to be analyzed. The analysis unit 346 analyzes the degree of maturity of the business entity related to environmental management based on the information acquired by the acquisition unit 345. Proposal information for improving the environmental management of the business entity is presented according to the degree of maturity obtained by the analysis unit 346.

## Description

### Background

### 1. Technological Field

The present invention relates to an environmental management analysis system and an environmental management analysis program.

### 2. Description of the Related Art

In recent years, companies have been required to maintain management while reducing the load on the global environment caused by business activities. Business management aiming at sustainable development of business while harmonizing with the global environment is implemented in many companies as environmental management.

In each company that implements environmental management, management contents are reviewed and improved in consideration of changes in the global environment and the management environment. In general, when a strategy for improving environmental management is formulated, a contract is often made with an external environmental consultant. The company and the environmental consultant often discuss to find problems, plan and execute improvement measures, confirm effects, and the like, on a one-on-one basis. In this context, an NDA (Non-Disclosure Agreement) is usually concluded between a company and an environmental consultant, and the discussed matters are handled as know-how of the company and are not disclosed to the outside. Therefore, improvement cases of a certain company are unlikely to spread to other companies.

Thus, other companies that do not have know-how to improve environmental management cannot easily come up with improvement measures and need to start by looking for an environmental consultant. This is time-consuming and may lead to a delay in responding to the challenges the company has. Furthermore, in a case where not only one company but many companies have similar problems, a delay in responding to such challenges may lead to an acceleration of global environmental destruction.

Many companies also have a problem in that evaluation regarding their environmental management is not appropriately performed since it is difficult to know statuses of other companies implementing environmental management.

In this regard, JP 2006-133902 A discloses an environmental management evaluation method for evaluating environmental management of a business entity such as a company or the like without an environmental consultant. In this environmental management evaluation method, answers to questionnaires for evaluating environmental management are collected through a communication network, and environmental management is evaluated using a computer, thereby improving the efficiency of evaluation acquisition.

### Summary

However, the technique of JP 2006-133902 A has a problem in that although quick evaluation of the environmental management of each business entity can be expected, improvement in the environmental management of each business entity cannot be expected.

The present invention has been made in view of the above circumstances, and an object of the present invention is to provide an environmental management analysis system and an environmental management analysis program capable of presenting information useful for improving environmental management of each business entity.

The object of the present invention is achieved by the following means.
(1) An environmental management analysis system comprising:
   an acquisition unit which acquires information on an organization system related to environmental management of a business entity to be analyzed,
   an analysis unit which analyzes a degree of maturity of the business entity related to environmental management based on the information acquired by the acquisition unit, and
   a presentation unit which presents proposal information for improving environmental management of the business entity according to the degree of maturity acquired by the analysis unit.
(2) The environmental management analysis system according to claim 1, further comprising an output unit which outputs the degree of maturity acquired by the analysis unit.
(3) The environmental management analysis system according to claim 1 or 2, wherein the acquisition unit further acquires at least one of information on approaches to global warming, resources, products, contaminants, and biological diversity regarding environmental management of the business entity.
(4) The environmental management analysis system according to any one of claims 1 to 3, wherein the presentation unit presents proposal information regarding a method of creating an organization system.
(5) The environmental management analysis system according to claim 4, wherein the presentation unit presents proposal information regarding a method capable of reducing man-hours of organization management of the business entity as the method of creating the organization system.
(6) The environmental management analysis system according to claim 3, wherein the presentation unit presents proposal information regarding setting of quantitative targets for at least one of approaches to global warming, resources, products, contaminants, and biological diversity regarding environmental management of the business entity.
(7) An environmental management analysis program causing a computer to perform the process comprising the steps of:
   acquiring information on an organization system related to environmental management of a business entity to be analyzed;
   analyzing a degree of maturity of the business entity related to environmental management based on the information; and
   presenting proposal information for improving environmental management of the business entity according to the degree of maturity.

According to the present invention, the environmental management analysis system analyzes the degree of maturity of the environmental management of the business entity, and presents recommendation information for improving the environmental management of the business entity according to the degree of maturity of the environmental management of the business entity. As a result, the business entity can acquire the degree of maturity of the environmental management and the recommendation information without intervention of an environmental consultant. Thus, the business entity can improve the environmental management based on the degree of maturity of the environmental management and the recommendation information.

### Brief Description of the Drawings

Fig. 1 is a block diagram illustrating a configuration of an environmental management analysis system according to an embodiment.
Fig. 2 is a schematic block diagram illustrating a hardware configuration of a data server illustrated in Fig. 1.
Fig. 3 is a functional block diagram illustrating main functions of a control device illustrated in Fig. 2.
Fig. 4 is a flowchart illustrating a processing procedure of an environmental management analysis method according to an embodiment.
Fig. 5 is a schematic diagram illustrating a method for acquiring information on environmental management of a business entity.
Fig. 6 is a table illustrating allocated points for question items regarding environmental management.
Fig. 7 is a table illustrating a correspondence relationship between a total number of acquired points and a degree of maturity of environmental management.
Fig. 8 is a schematic diagram conceptually illustrating an improvement in a level of the degree of maturity of the environmental management.
Fig. 9 is a schematic diagram illustrating a diagnosis result of the degree of maturity of the environmental management.
Fig. 10 is a schematic diagram illustrating a method of creating an organization system.

### Detailed Description of Embodiments

Hereinafter, an embodiment of the present invention will be described with reference to the accompanying drawings. In the description of the drawings, the same elements are denoted by the same reference numerals, and redundant description will be omitted. In addition, dimensional ratios in the drawings are exaggerated for convenience of description, and may be different from actual ratios.

In the present embodiment, the "business entity" refers to, for example, any organization that conducts a business, and the scale and business form thereof are arbitrary. For example, the business entity may be an organization such as a general company, a government office, a local public organization, an NPO (Nonprofit Organization), an NGO (Non-Governmental Organization), or the like. Furthermore, the business entity may be a branch office or a branch store, which is a subordinate organization of the organization described above, a small organization of a department unit (department, section, or the like), or the like.

In addition, in the present embodiment, "environmental management" refers to management in which a business entity continuously develops its business while harmonizing with the global environment through environmental conservation activities. Here, the environmental conservation activities include activities for reducing environmental load in the manufacturing and sales processes of products, enlightenment and education given to employees and staff, PR activities to the local community, and the like.

### (Configuration of Environmental Management Analysis System)

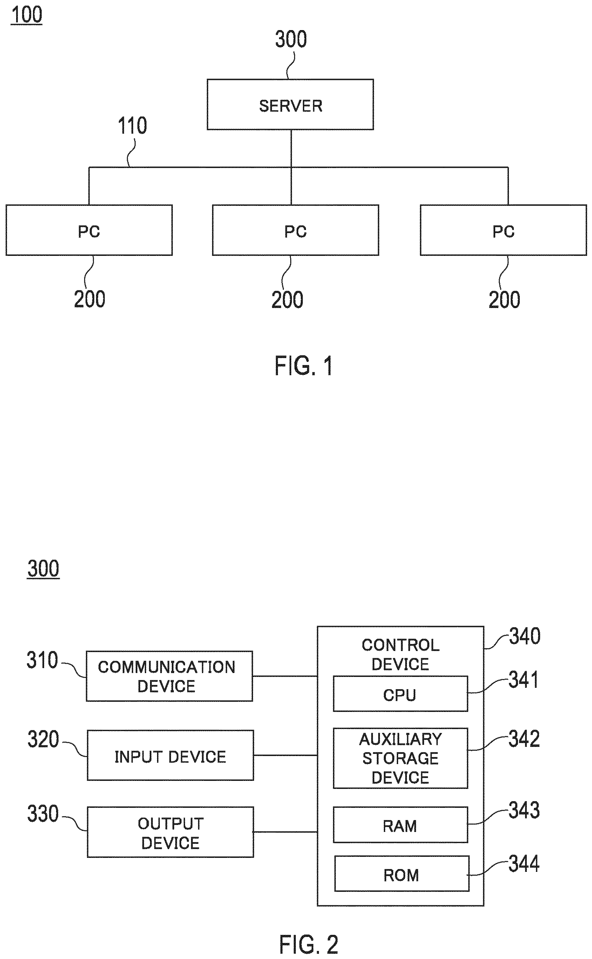

Fig. 1 is a block diagram illustrating a configuration of an environmental management analysis system according to an embodiment, and Fig. 2 is a block diagram illustrating a schematic hardware configuration of a server 300 illustrated in Fig. 1. As illustrated in Fig. 1, the environmental management analysis system 100 includes a plurality of PCs (Personal Computers) 200 and a server 300.

Each of the PCs 200 is, for example, a personal computer, a mobile terminal, or the like owned by each business entity, includes a keyboard, a mouse, a touch panel, and the like as input devices, and includes a display, a speaker, and the like as output devices. The PC 200 can be connected to a printer. The input devices are used to input information on environmental management of the business entity. The output devices are used to output a diagnosis result of the degree of maturity of the environmental management. As will be described later, the degree of maturity of the environmental management is an index representing the degree of maturity related to the environmental management, and is represented by, for example, a level of 1 to 5.

The PC 200 can access the server 300 through the communication network 110. The communication network 110 includes a LAN (Local Area Network), the Internet, a WAN (Wide Area Network), and the like.

The server 300 analyzes the environmental management of the business entity, and makes a proposal for improving the environmental management to the business entity based on the analysis result. Furthermore, the server 300 functions as a web server, and creates and provides a web page accessible by the PC 200 of each business entity through the communication network 110. The server 300 is, for example, a computer such as a mainframe, a personal computer, or the like. Alternatively, the server 300 may be configured by a cloud server. As illustrated in Fig. 2, the server 300 includes a communication device 310, an input device 320, an output device 330, and a control device 340.

The communication device 310 is a communication interface for communicating with an external device such as the PC 200 or the like. For communication, for example, a network protocol such as TCP/IP (Transmission Control Protocol/Internet Protocol) or the like may be used. The input device 320 includes inputting devices such as a keyboard, a mouse, and the like. The output device 330 includes outputting devices such as a display, a speaker, and the like.

The control device 340 controls the communication device 310, the input device 320, and the output device 330. The control device 340 includes a CPU 341, an auxiliary storage device 342, a RAM (Random Access Memory) 343, and a ROM (Read Only Menory) 344.

The CPU 341 implements various functions by executing the environmental management analysis program. The environmental management analysis program is stored in advance in the auxiliary storage device 342, and is loaded into the RAM 343 when executed by the CPU 341. The auxiliary storage device 342 includes, for example, an SSD (Solid State Drive), an HDD (Hard Disk Drive), and the like. The auxiliary storage device 342 stores various software programs such as an OS (Operating System) or the like in addition to the environmental management analysis program. In addition, as will be described later, the auxiliary storage device 342 stores a plurality of files used for improving the environmental management of the business entity. In addition, the RAM 343 stores calculation results of the CPU 341 and the like. The ROM 344 stores parameters and the like used in programs such as the OS.

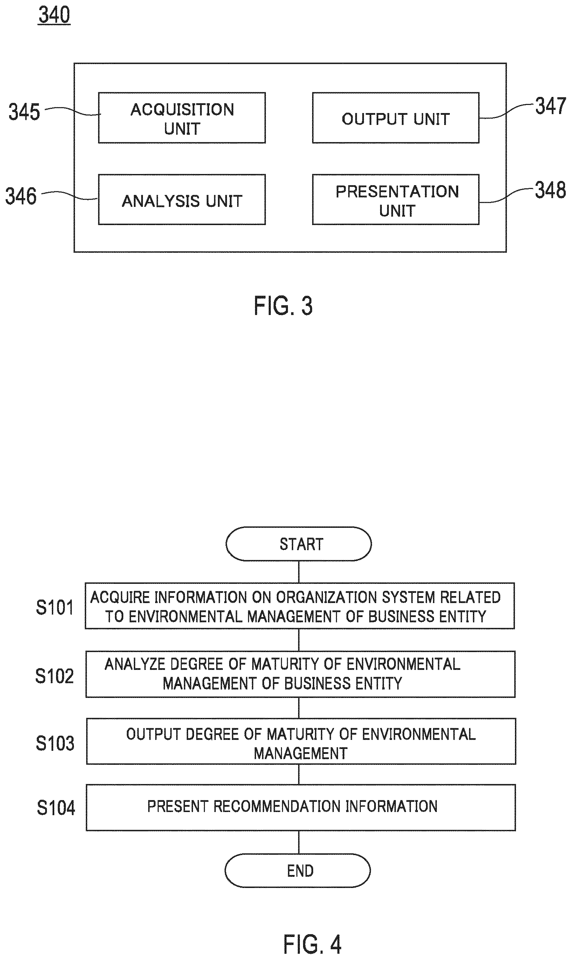

Fig. 3 is a functional block diagram illustrating the main functions of the control device 340 illustrated in Fig. 2. In the present embodiment, the CPU 341 functions as an acquisition unit 345, an analysis unit 346, an output unit 347, and a presentation unit 348 by executing the environmental management analysis program. These functional units will be described in detail below.

### (Environmental Management Analysis Method)

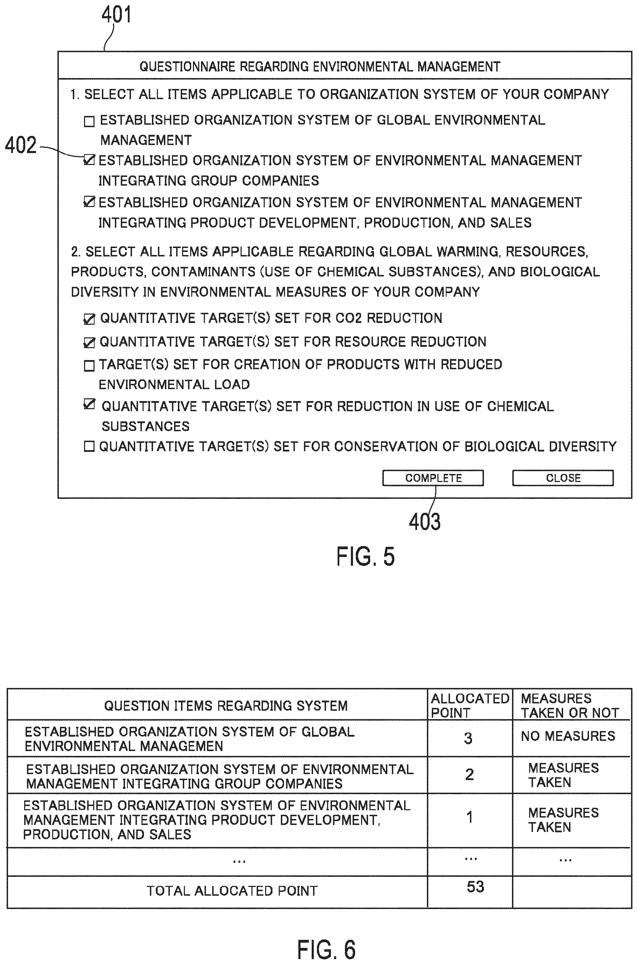

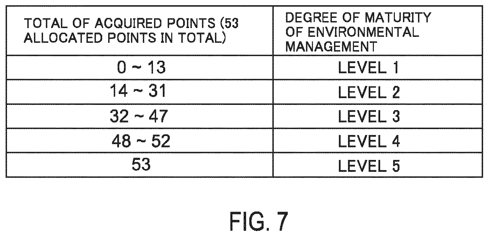

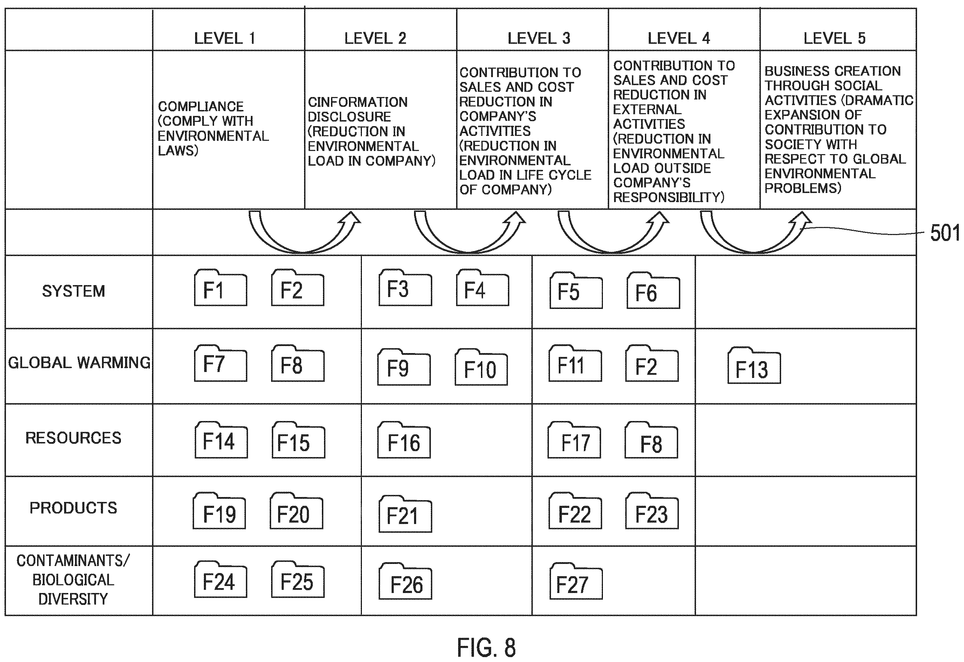

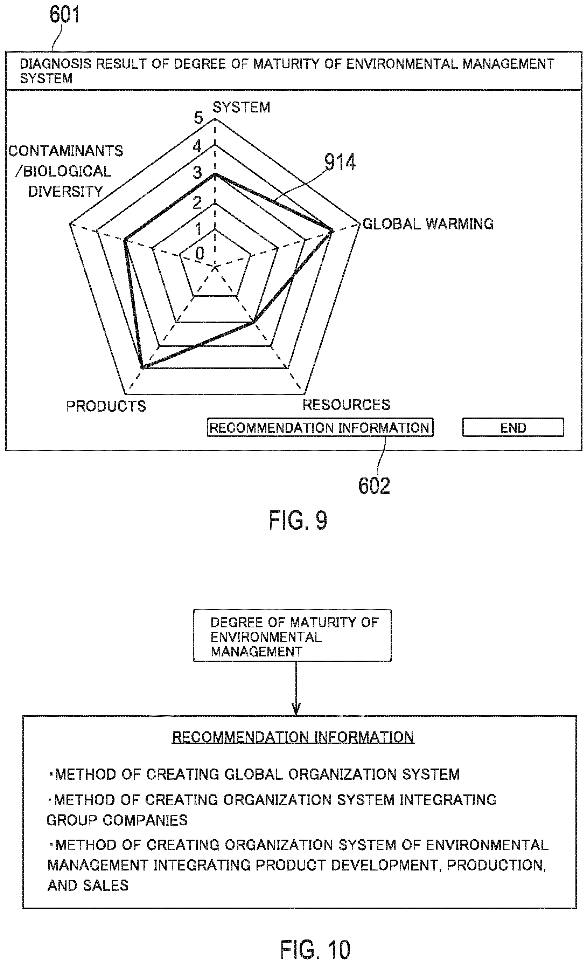

Fig. 4 is a flowchart illustrating a processing procedure of the environmental management analysis method according to the present embodiment. The processing of the flowchart illustrated in Fig. 4 is implemented by the CPU 341 executing the environmental management analysis program. Fig. 5 is a schematic diagram illustrating a method of acquiring information on environmental management of a business entity, and Fig. 6 is a table illustrating allocated points to question items regarding environmental management. Fig. 7 is a table illustrating a correspondence relationship between the total number of acquired points and the degree of maturity of the environmental management. Fig. 8 is a schematic diagram conceptually illustrating the improvement in the level of the degree of maturity of the environmental management, and Fig. 9 is a schematic diagram illustrating an example of a diagnosis result of the degree of maturity of environmental management. Fig. 10 is a schematic diagram illustrating a method of creating an organization system.

As illustrated in Fig. 4, first, the acquisition unit 345 acquires information on the organization system related to the environmental management of the business entity to be analyzed (step S101). A user (person in charge) of the business entity inputs information on environmental management to the PC 200. The input information is transmitted to the server 300 through the communication device 310. The organization system is a system of an organization related to environmental management of a business entity, and includes, for example, information on an execution system of operating officers related to environmental management, whether or not an environmental committee has been established, the position of an environmental management department in the organization of the head office and the number of personnel thereof, the position of an environmental management department in the organization of a branch office, a group company, and an associated company and the number of personnel thereof, and the like.

In the present embodiment, the acquisition unit 345 can further acquire, as the information regarding the environmental management, information regarding environmental measures of the business entity (at least one of "global warming", "resources", "products", "contaminants", and "biological diversity") in addition to the information regarding the organization system of the business entity.

Among them, "global warming" is information related to an approach to global warming countermeasures with respect to the environmental management of the business entity, and may include, for example, the presence or absence of a reduction quantitative target for CO2 emitted by the business entity or the like. The "resources" are information related to resource saving measures regarding environmental management of the business entity, and may include, for example, the presence or absence of a reduction quantitative target for resources used by the business entity or the like. The "products" are information related to environmental load measures of the business entity, in particular, load on the global environment due to production of the product (conducted directly or indirectly by business pair), reduction in power consumption when the produced product is used, and the like, and may include, for example, the presence or absence of a creation target of a product with reduced environmental load or the like. The "contaminants" are information related to contaminant control measures regarding the environmental management of the business entity, and may include, for example, the presence or absence of a reduction quantitative target for the contaminants discharged by the business entity or the like. The "biological diversity" is information regarding an approach to ecosystem conservation regarding the environmental management of the business entity, and may include, for example, the presence or absence of a quantitative target of the approach to biological diversity conservation or the like.

As illustrated in Fig. 5, for example, the acquisition unit 345 causes the display of the PC 200 to display a web page 401 of "Questionnaire regarding Environmental Management". For this interface, for example, a web API provided by the server 300 is used. The "questionnaire regarding environmental management" is, for example, a questionnaire including a plurality of question items regarding the organization system and environmental measures (hereinafter, simply referred to as "questionnaire"). The questionnaire illustrated in Fig. 5 is a representative example of question items regarding environmental management. The user of each business entity puts a check mark 402 in the corresponding item in the questionnaire and presses a complete button 403 to input information on the environmental management of his or her company. The acquisition unit 345 acquires information on environmental management for each business entity through a questionnaire.

In the input example of the questionnaire illustrated in Fig. 5, for the organization system, the question item "established an organization system of global environmental management" is not applicable (not checked), and the question items "established an organization system of environmental management integrating group companies" and "established an organization system of environmental management integrating product development, production, and sales" are applicable (checked). In addition, regarding environmental measures, there are question items "quantitative target(s) set for CO2 reduction", "quantitative target(s) set for resource reduction", "target(s) set for creation of products with reduced environmental load", "quantitative target(s) set for reduction in use of chemical substances", and "quantitative target(s) set for conservation of biological diversity".

Although not illustrated, question items of the "system" other than the "organization system" include the "environmental activity system" such as the establishment of an environmental management system (for example, ISO 14001), integrated certification with other management systems (for example, ISO 9001), and targets, systems, and the like related to a reduction of emissions and recycling (so-called 3R). Hereinafter, the organization system and the environmental activity system are collectively referred to as "system". In addition, regarding environmental measures, other question items include a reduction target regarding management man-hours of the environmental management system, a target regarding energy saving, a target regarding an introduction plan of renewable energy, a target regarding water reduction or water saving, a target regarding environmentally friendly products, and the like. Examples of the renewable energy include solar power generation.

Furthermore, the case where the acquisition unit 345 acquires the information regarding the environmental management of each business entity through the web page 401 has been described above, but the present invention is not limited to the case of acquiring the information using the web page. For example, a questionnaire question may be transmitted to the PC 200 of each business entity by e-mail, answers to the question may be collected by a reply from the user of each business entity, and the answers may be collected by the server 300 or the like.

Next, the analysis unit 346 analyzes the degree of maturity of the environmental management of the business entity (step S102). As illustrated in Fig. 6, allocated points (weighting) are determined are in advance for respective question items of the questionnaire. For example, regarding the organization system, three points are assigned to "established an organization system of global environmental management", two points are assigned to "established an organization system of environmental management integrating group companies", and one point is assigned to "established an organization system of environmental management integrating product development, production, and sales". Although not illustrated, the allocated points are similarly determined for respective question items of environmental measures.

Furthermore, practically, other question items may be set in addition to the question items described above. In the example illustrated in Fig. 6, a total allocated point obtained by adding the allocated points for the items of the system is set to 53 points. In the table of Fig. 6, whether the business entity to be analyzed has taken measures is described in the right column based on whether or not each question item of the questionnaire of Fig. 5 is checked. Three allocated points are added with measures taken, and no allocated point is added with no measures taken.

As illustrated in Fig. 7, the degree of maturity of the environmental management is determined according to the total of the acquired points of the business entity with respect to the 53 allocated points in total. The total of the acquired points is a score obtained by adding the points of the corresponding question items in Fig. 6. In the present embodiment, the obtained degree of maturity of the environmental management is expressed at a plurality of levels such as 1 to 5 for each item of system, global warming, resources, products, and contaminants/biological diversity. The larger the numerical value of the level, the higher the degree of maturity.

For example, as illustrated in Fig. 8, level 1 is a stage where the regulations such as the Basic Environment Law, and the Air Pollution Control Law, and the like are complied with. Level 2 is a stage where the environmental load is reduced in the company and the company's information can be disclosed by an environmental report or the like. Level 3 is a stage where a reduction in environmental load in the life cycle of the company can contribute to an increase in sales and cost reduction in the company's activities. Level 4 is a stage where a reduction in environmental load outside the company's responsibility can contribute to an increase in sales and cost reduction in external activities. Level 5 is a stage where business can be created through social activities by dramatically expanding contribution to society with respect to global environmental problems.

Returning to Fig. 4 again, in step S102, the output unit 347 outputs the degree of maturity of the environmental management acquired by the analysis unit 346 (step S103). The output unit 347 outputs the degree of maturity of the environmental management to, for example, the display or the speaker of the PC 200 or a printer connected to the PC 200 at a level for each item of system, global warming, resources, products, and contaminants/biological diversity. Fig. 9 illustrates a case where a web page 601 of "diagnosis result of degree of maturity of the environmental management" is displayed on the display. On the web page 601, the degree of maturity of the environmental management is displayed in the form of a radar chart with each item of system, global warming, resources, products, and contaminants/biological diversity as an axis. In the example of Fig. 9, the degree of maturity of the environmental management is as follows: system is at level 3, global warming is at level 4, resources are at level 2, products are at level 4, and contaminants/biological diversity are at level 3. Note that the display format of the levels is not limited to the radar chart, and the levels can be displayed in a bar graph or a line graph. Alternatively, the magnitude of the levels can be displayed numerically.

After the user confirms the degree of maturity of the environmental management, the process proceeds to processing of presenting recommendation information (proposal information) by pressing a button 602 of "recommendation information". The recommendation information is information presented to the user by the server 300 in order to improve the environmental management of the business entity to be analyzed.

Referring back to Fig. 4 again, the presentation unit 348 presents the recommendation information (step S 104). The presentation unit 348 presents recommendation information regarding, for example, an organization system according to the degree of maturity of the environmental management of the business entity. The recommendation information may be, for example, a file (data) recommended to be used for improving environmental management. As described later, the file is provided in the form of, for example, a document, an image, a moving image, an application program (hereinafter, referred to as an "application"), or the like. This file is provided in advance from one or a plurality of entities (business entities) that operate and manage the server 300, and is stored in the auxiliary storage device 342 or the like.

As illustrated in Fig. 8, for example, a plurality of files F1 to F27 for presenting recommendation information are registered in the environmental management analysis system 100. For example, F1 to F6 are files related to the system, and F7 to F13 are files related to global warming. Similarly, the files of F14 to F27 are files related to resources, products, or contaminants/biological diversity.

In addition, the files F1 to F27 are classified in advance by, for example, an administrator according to the level of the degree of maturity of the environmental management. For example, among the files F1 to F6 related to the system, F1 and F2 are classified as level 1 and used when the level is improved from level 1 to level 2. F3 and F4 are classified as level 2 and used when the level is improved from level 2 to level 3. F5 and F6 are classified as level 3 and used when the level is improved (indicated by arrow 501) from level 3 to level 4. The same applies to the files on global warming, resources, products, and contaminants/biological diversity. Note that, instead of the administrator, the presentation unit 348 may classify the files F1 to F27 according to the levels following predetermined classification conditions.

Each of the files F1 to F27 may be, for example, a document in any of the following formats: text, PDF (Portable Document Format), Microsoft Word (registered trademark), Microsoft Excel (registered trademark), Microsoft PowerPoint (registered trademark), and the like.

Alternatively, each of the files F1 to F27 may be an image or a moving image in any format such as TIFF (Tagged Image File Format), JPEG (Joint Photographic Experts Group), GIF (Graphics Interchange Format), BMP (Bitmap), PNG (Portable Network Graphics), MP4 (Mpeg-4), MOV (QuickTime), WMV (Windows Media Video), FLV (Flash Video), or the like.

The presentation unit 348 presents a file suitable for the improvement in the level from a large number of files stored in the auxiliary storage device 342 according to the degree of maturity of the environmental management of the business entity. For example, the presentation unit 348 presents the file F1 or the file F2 as the recommendation information in a case where the degree of maturity of the environmental management of the system (organization system) of the business entity is at level 1, presents the file F3 or the file F4 as the recommendation information in a case where the degree of maturity of the environmental management of the system of the business entity is at level 2, and presents the file F5 or the file F6 as the recommendation information in a case where the degree of maturity of the environmental management of the system of the business entity is at level 3.

In addition, as illustrated in Fig. 10, in a case where the presentation unit 348 determines that the degree of maturity of the environmental management of the organization system is low, the presentation unit 348 presents recommendation information regarding the method of creating the organization system. For example, in the example illustrated in Fig. 5, the question item "established an organization system of global environmental management" is not checked. Therefore, the presentation unit 348 determines that the organization system needs to be improved, and presents a method of creating an organization system of global environmental management as the recommendation information. In addition, when the question item "established an organization system of environmental management integrating group companies" is not checked, the method of creating the organization system of the environmental management in which the group companies are also integrated is presented as the recommendation information. In addition, when the question item "established an organization system of environmental management integrating product development, production, and sales" is not checked, a method of creating an organization system of environmental management integrating product development, production, and sales is presented as the recommendation information.

In addition, as a method of creating an organization system, for example, a method capable of reducing the number of man-hours of the organization management of the business entity can be proposed. By introducing this method, it is possible to reduce the cost required for the organization management of the business entity.

The recommendation information can be provided in a file such as a document, an image, a moving image, an application, or the like, for example. The documents include, for example, a collection of essences and know-how summarizing the main points of environmental management, a collection of cases summarizing practical cases of environmental management, a workflow related to environmental activities (strategy formulation, energy saving, waste reduction, chemical substance reduction), introduction information on a consultant (for example, environment, energy saving, management), introduction information on environment-related equipment (for example, energy saving equipment, measurement/detection equipment, and the like), references related to environmental management, and the like. In addition, the moving image includes a lecture on environmental management and the like.

Furthermore, the application includes an energy saving application and the like. The energy saving application acquires information regarding facilities consuming resources such as power, gas, steam, water, and the like for the business entity, and analyzes the acquired information. Then, improvement cases leading to energy saving, implementation methods thereof, trial calculation results of effects, trial calculation methods of effects, and the like are presented to the user as recommendation information.

In addition, in the environmental management analysis system 100 of the present embodiment, the file can be provided from a plurality of different entities (business entities) that manage the server 300 as described above. Each business entity can upload and register a file to the server 300 through the PC 200. The registered file is stored in the auxiliary storage device 342. Therefore, each business entity can share a file with another business entity by registering and providing, for example, know-how of environmental management, improvement cases, and the like as a file. As a result, many business entities can share know-how of environmental management, improvement cases, and the like through the environmental management analysis system 100, and thus, many business entities can cooperatively deal with global environmental problems in which approaches may be limited only by individual business entities.

Furthermore, in recent years, environmental technology experts and engineers have retired due to the age or the like in many business entities, and there is a concern about the transmission of environmental technology and know-how. In this context, the environmental management analysis system 100 plays a role as a platform for sharing know-how of environmental management, improvement cases, and the like, so that environmental technology and know-how can be widely transmitted in the industry.

As described above, in the processing of the flowchart of Fig. 4, the server 300 acquires at least information on the organization system related to the environmental management of the business entity to be analyzed, and analyzes the degree of maturity of the environmental management of the business entity based on the information. Then, the server 300 presents recommendation information for improving the environmental management of the business entity according to the degree of maturity of the environmental management of the business entity.

The environmental management analysis system 100 of the present embodiment described above has the following specific effects.

The environmental management analysis system 100 analyzes the degree of maturity of the environmental management of the business entity, and presents recommendation information for improving the environmental management of the business entity according to the degree of maturity of the environmental management of the business entity. As a result, the business entity can acquire the degree of maturity of the environmental management and the recommendation information without intervention of an environmental consultant. Thus, the business entity can improve the environmental management based on the degree of maturity of the environmental management and the recommendation information.

The configurations of the environmental management analysis system 100 and the environmental management analysis program described above have been described as main configurations in describing the features of the above embodiment, and are not limited to the above configurations. Various modifications can be made within the scope of claims.

For example, in the above example, the case where the allocated points for respective question items regarding environmental management are fixed has been described, but the present invention is not limited to such a case. For example, the analysis unit 346 analyzes information regarding environmental management of the business entity, and can change the allocated points for respective question items according to the analysis result. For example, from the result of analyzing the organization system of the business entity, the analysis unit 346 can change the allocated points such that "established an organization system of environmental management integrating group companies" is emphasized rather than "established an organization system of global environmental management". As a result, the analysis accuracy of the degree of maturity of the environmental management can be improved according to the organization system of the business entity, and more appropriate recommendation information can be provided.

In the above example, the case where each question item regarding environmental management is fixed has been described, but the present invention is not limited to such a case. For example, the analysis unit 346 analyzes information regarding environmental management of the business entity, and can add question items or change question details according to the analysis result. For example, in a case where the information regarding environmental management of the business entity satisfies a specific requirement, the analysis unit 346 can add question items regarding finance. As a result, the analysis accuracy of the degree of maturity of the environmental management can be improved according to the financial situation of the business entity, and more appropriate recommendation information can be provided.

Furthermore, the acquisition unit 345 may be configured to acquire information based on past disclosure information as information regarding environmental management of the business entity. As a result, the analysis accuracy of the degree of maturity of the environmental management of the business entity can be improved. For example, the acquisition unit 345 can acquire information on environmental management that was requested and disclosed by an organization operating an international information disclosure system. Examples of such known organizations include CDP (https://www.cdp.net/ja). CDP is a project that requires major companies around the world to disclose information on specific greenhouse gas emissions and approaches to climate change by institutional investors who are shareholders of the companies.

In addition, the presentation unit 348 can present the recommendation information for each of the items of system, global warming, resources, products, and contaminants/biological diversity according to the degree of maturity of the environmental management of the business entity. For example, the presentation unit 348 presents, on the display of the PC 200, files for items that need to be improved in the level among the items of system, global warming, resources, products, and contaminants/biological diversity, based on the degree of maturity of the environmental management of the business entity. The items that need to be improved in the level are, for example, items for which the degree of maturity of the environmental management has not reached level 5. In the example of Fig. 9, since the degree of maturity of the environmental management does not reach level 5 in all the items of system, global warming, resources, products, the contaminants/biological diversity, all the items can be the targets of the items that need to be improved in the level. Among them, a file on the resources, which is the lowest at level 2, can be preferentially presented.

The user can obtain information for improving environmental management by selecting and using (for example, confirm or execute contents) any of the presented files.

Alternatively, instead of presenting a file as the recommendation information, the presentation unit 348 can directly present specific information for improving environmental management to the user. The presentation unit 348 can determine the necessity or priority of presentation of the recommendation information based on the degree of maturity of the environmental management of each item of system, global warming, resources, products, and contaminants/biological diversity, and can present the recommendation information in the order of the priority or in a predetermined order. In this case, the presentation unit 348 may present the recommendation information in ascending order of level among the items of system, global warming, resources, products, and contaminants/biological diversity, for example.

For example, in the example of Fig. 9, the presentation unit 348 determines that it is necessary to present the recommendation information with the highest priority on resources, which are the lowest at level 2, and presents specific information for improving the environmental management to the user using a file related to the resources.

The environmental management analysis program for the server 300 may be provided by, for example, a computer-readable recording medium such as a USB memory, a flexible disk, a CD-ROM, or the like, or may be provided online via a network such as the Internet or the like. In this case, the program recorded in the computer-readable recording medium is usually transferred to and stored in a memory, a storage unit, or the like. Furthermore, the environmental management analysis program may be provided as independent application software, or may be, as one function of the server 300, incorporated into the software of a device of the server 300.

The entire disclosure of Japanese Patent Application No. 2019-219301, filed on December 4, 2019, is incorporated herein by reference in its entirety.

### [Reference Signs List]

100 environmental management analysis system,
110 communication network,
200 PC,
300 server,
310 communication device,
320 input device,
330 output device,
340 control device,
341 CPU,
342 auxiliary storage device,
343 RAM,
344 ROM,
345 acquisition unit,
346 analysis unit,
347 output unit,
348 presentation unit

## Claims

1. An environmental management analysis system comprising:
an acquisition unit which acquires information on an organization system related to environmental management of a business entity to be analyzed,
an analysis unit which analyzes a degree of maturity of the business entity related to environmental management based on the information acquired by the acquisition unit, and
a presentation unit which presents proposal information for improving environmental management of the business entity according to the degree of maturity acquired by the analysis unit.

2. The environmental management analysis system according to claim 1, further comprising an output unit which outputs the degree of maturity acquired by the analysis unit.

3. The environmental management analysis system according to claim 1 or 2, wherein the acquisition unit further acquires at least one of information on approaches to global warming, resources, products, contaminants, and biological diversity regarding environmental management of the business entity.

4. The environmental management analysis system according to any one of claims 1 to 3, wherein the presentation unit presents proposal information regarding a method of creating an organization system.

5. The environmental management analysis system according to claim 4, wherein the presentation unit presents proposal information regarding a method capable of reducing man-hours of organization management of the business entity as the method of creating the organization system.

6. The environmental management analysis system according to claim 3, wherein the presentation unit presents proposal information regarding setting of quantitative targets for at least one of approaches to global warming, resources, products, contaminants, and biological diversity regarding environmental management of the business entity.

7. An environmental management analysis program causing a computer to perform the process comprising the steps of:
acquiring information on an organization system related to environmental management of a business entity to be analyzed;
analyzing a degree of maturity of the business entity related to environmental management based on the information; and
presenting proposal information for improving environmental management of the business entity according to the degree of maturity.
